(19) Europäisches Patentamt
European Patent Office
Office européen des brevets

(11) **EP 4 701 317 A1**

(12) **EUROPEAN PATENT APPLICATION**
published in accordance with Art. 153(4) EPC

(43) Date of publication:
**25.02.2026 Bulletin 2026/09**

(21) Application number: **24791750.3**

(22) Date of filing: **01.03.2024**

(51) International Patent Classification (IPC):
**H04W 74/08** (2024.01)

(52) Cooperative Patent Classification (CPC):
**H04B 7/185; H04W 74/00; H04W 74/08;**
**H04W 74/0833**

(86) International application number:
**PCT/CN2024/079560**

(87) International publication number:
**WO 2024/217162 (24.10.2024 Gazette 2024/43)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.04.2023 CN 202310410537**

(71) Applicant: **Datang Mobile Communications**
**Equipment Co., Ltd.**
**Beijing 100085 (CN)**

(72) Inventor: **GUAN, Juan**
**Beijing 100085 (CN)**

(74) Representative: **Studio Torta S.p.A.**
**Via Viotti, 9**
**10121 Torino (IT)**

(54) **RANDOM ACCESS METHOD AND APPARATUS**

(57) Embodiments of the present disclosure provide a random access method and apparatus. The method comprises: receiving sending indication information of a new system information block (SIB), wherein the sending indication information indicates whether a network device sends the new SIB; and receiving, on the basis of the sending indication information, the new SIB sent by the network device, and performing random access on the basis of the new SIB and a SIB1.

A terminal receives transmission indication information for an additional system information block (SIB), where the transmission indication information indicates whether a network device transmits the additional SIB —— 101

The terminal receives, based on the transmission indication information, the additional SIB transmitted by the network device, and performs random access based on the additional SIB and SIB1 —— 102

FIG. 1

**Description**

CROSS-REFERENCES TO RELATED APPLICATIONS

The present application claims priority to Chinese patent application No. 2023104105374 filed on April 17, 2023, entitled "Random Access Method and Apparatus", which is hereby incorporated by reference in its entirety.

FIELD

The present application relates to the field of communication, and in particular to a random access method and apparatus.

BACKGROUND

In non-terrestrial networks (NTNs), terminals may decode a system information block (SIB) 1 transmitted by a satellite to obtain a time-frequency domain resource indication of SIB19, receive the SIB19 transmitted by the satellite based on the time-frequency domain resource indication, decode the received SIB19 to obtain random access parameters, and perform random access based on these parameters. Typically, terminals cannot complete SIB1 reception and decoding within a service period of a beam. Consequently, terminals cannot receive the SIB19 until at least one beam revisit period after receiving the SIB1.

In beam hopping scenarios in these NTNs, since a coverage range of a satellite beam is large and the beam power is limited, the number of beam footprints served by each beam is large and the beam revisit period is long. In a case that the SIB19 is received after at least one beam revisit period after receiving decoded SIB1, the random access delay is increased, resulting in low random access efficiency.

BRIEF SUMMARY

Embodiments of the present application provide a random access method and apparatus to address the defects of the prior art in that the random access delay increases, resulting in low random access efficiency, to achieve the purpose of shortening random access delay and improving random access efficiency.

In a first aspect, an embodiment of the present application provides a random access method, performed by a terminal, the method including:

receiving transmission indication information for an additional system information block (SIB), where the transmission indication information indicates whether a network device transmits the additional SIB; and

receiving, based on the transmission indication information, the additional SIB transmitted by the network device, and performing random access based on the additional SIB and a SIB 1.

In an embodiment, receiving, based on the transmission indication information, the additional SIB transmitted by the network device may include:

receiving the additional SIB in case that the transmission indication information indicates transmitting the additional SIB.

In an embodiment, receiving the additional SIB may include:

monitoring, in a slot ($n_0$ + 1), a first physical downlink control channel (PDCCH) corresponding to the additional SIB, or, monitoring, in a slot that satisfies ( $(n_0 + \lfloor Y \cdot M \rfloor) \mathrm{mod} N_{\mathrm{slot}}^{\mathrm{frame},\mu}$ ), a first physical downlink control channel (PDCCH) corresponding to the additional SIB, where $n_0$ is an index of a first slot in a Type 0 PDCCH common search space (CSS) monitoring occasions within a radio frame, Y is a maximum number of SSBs in each SSB burst set, $\lfloor \cdot \rfloor$ is a floor operator, $N_{\mathrm{slot}}^{\mathrm{frame},\mu}$ is a number of slots in each frame, and mod is a modulo operator; and

receiving the additional SIB on time-frequency domain resources indicated by the first PDCCH (i.e., the time-frequency domain resources of the first PDCCH).

In an embodiment, the method may further include:

monitoring, in a slot $n_0$, a second PDCCH corresponding to the SIB1; and

receiving the SIB1 on time-frequency domain resources indicated by the second PDCCH (i.e., the time-frequency domain resources of the second PDCCH).

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In an embodiment, performing random access based on the additional SIB and the SIB1 may include:

determining non-terrestrial network (NTN)-associated random access parameters based on the additional SIB and the SIB1; and

performing random access based on the NTN-related random access parameters.

In a second aspect, an embodiment of the present application provides a random access method, performed by a network device, the method including:

transmitting transmission indication information for an additional system information block (SIB) to a terminal; and

transmitting the additional SIB to the terminal in a case that the transmission indication information indicates transmitting the additional SIB, where the additional SIB is used by the terminal for random access.

In an embodiment, transmitting the additional SIB to the terminal may include:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \mathrm{mod} N_{slot}^{frame,\mu}$ ), a first physical downlink control channel (PDCCH) corresponding to the additional SIB to the terminal, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

In an embodiment, the method may further include:

transmitting, in a slot $n_0$, a second PDCCH corresponding to the SIB1 to the terminal; and

transmitting, to the terminal, the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In a third aspect, an embodiment of the present application provides a random access apparatus, including: a memory, a transceiver, and a processor,
where the memory is used for storing a computer program; the transceiver is used for receiving and transmitting data under control of the processor; and the processor is used for reading the computer program in the memory and performing following operations:

receiving transmission indication information for an additional system information block (SIB), where the transmission indication information indicates whether a network device transmits the additional SIB; and

receiving, based on the transmission indication information, the additional SIB transmitted by the network device, and performing random access based on the additional SIB and a SIB 1.

In an embodiment, receiving, based on the transmission indication information, the additional SIB transmitted by the network device may include:
receiving the additional SIB in a case that the transmission indication information indicates transmitting the additional SIB.

In an embodiment, receiving the additional SIB may include:

monitoring, in a slot ($n_0$ + 1), a first physical downlink control channel (PDCCH) corresponding to the additional SIB, or, monitoring, in a slot that satisfies ( $(n_0 + \lfloor Y \cdot M \rfloor) \bmod N_{slot}^{frame,\mu}$ ), a first physical downlink control channel (PDCCH) corresponding to the additional SIB, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

receiving the additional SIB on time-frequency domain resources indicated by the first PDCCH.

In an embodiment, the processor is further used for:

monitoring, in a slot $n_0$, a second PDCCH corresponding to the SIB1; and

receiving the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In an embodiment, performing random access based on the additional SIB and the SIB1 may include:

determining NTN-related random access parameters based on the additional SIB and the SIB1; and

performing random access based on the NTN-related random access parameters.

In a fourth aspect, an embodiment of the present application provides a random access apparatus, including: a memory, a transceiver, and a processor,
where the memory is used for storing a computer program; the transceiver is used for receiving and transmitting data under control of the processor; and the processor is used for reading the computer program in the memory and performing following operations:

transmitting transmission indication information for an additional system information block (SIB) to a terminal; and

transmitting the additional SIB to the terminal in a case that the transmission indication information indicates transmitting the additional SIB, where the additional SIB is used by the terminal for random access.

In an embodiment, transmitting the additional SIB to the terminal may include:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \bmod N_{slot}^{frame,\mu}$ ), a first physical downlink control channel (PDCCH) corresponding to the additional SIB to the terminal, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

In an embodiment, the processor is further used for:

transmitting, in a slot $n_0$, a second PDCCH corresponding to the SIB1 to the terminal; and

transmitting, to the terminal, the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In a fifth aspect, an embodiment of the present application provides a random access apparatus, used in a terminal, the apparatus including:

a receiving unit, used for receiving transmission indication information for an additional system information block (SIB), where the transmission indication information indicates whether a network device transmits the additional SIB,

the receiving unit being further used for receiving, based on the transmission indication information, the additional SIB transmitted by the network device; and

a random access unit, used for performing random access based on the additional SIB and a SIB1.

In an embodiment, the receiving unit is further used for:
receiving the additional SIB in a case that the transmission indication information indicates transmitting the additional SIB.
In an embodiment, the receiving unit is further used for:

monitoring, in a slot ($n_0 + 1$), a first physical downlink control channel (PDCCH) corresponding to the additional SIB, or, monitoring, in a slot that satisfies ( $(n_0 + \lfloor Y \cdot M \rfloor) \bmod N_{slot}^{frame,\mu}$ ), a first physical downlink control channel (PDCCH) corresponding to the additional SIB, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

receiving the additional SIB on time-frequency domain resources indicated by the first PDCCH.

In an embodiment, the receiving unit is further used for:

monitoring, in a slot $n_0$, a second PDCCH corresponding to the SIB1; and

receiving the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.
In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In an embodiment, the random access unit is further used for:

determining NTN-related random access parameters based on the additional SIB and the SIB1; and

performing random access based on the NTN-related random access parameters.

In a sixth aspect, an embodiment of the present application provides a random access apparatus, used in a network device, the apparatus including:

a transmitting unit, used for transmitting transmission indication information for an additional system information block (SIB) to a terminal,

the transmitting unit being further used for transmitting the additional SIB to the terminal in a case that the transmission indication information indicates transmitting the additional SIB, where the additional SIB is used by the terminal for random access.

In an embodiment, the transmitting unit is further used for:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \mathrm{mod} N_{slot}^{frame,\mu}$ ), a first physical downlink control channel (PDCCH) corresponding to the additional SIB to the terminal, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

In an embodiment, the transmitting unit is further used for:

transmitting, in a slot $n_0$, a second PDCCH corresponding to the SIB1 to the terminal; and

transmitting, to the terminal, the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In a seventh aspect, an embodiment of the present application further provides a processor-readable storage medium, where the processor-readable storage medium stores a computer program, the computer program is used for causing a processor to perform the steps of the random access method described in the first aspect.

In an eighth aspect, an embodiment of the present application further provides a processor-readable storage medium, where the processor-readable storage medium stores a computer program, the computer program is used for causing a processor to perform the steps of the random access method described in the second aspect.

The embodiments of the present application provide a random access method and apparatus. The method may include receiving transmission indication information of an additional system information block (SIB), where the transmission indication information indicates whether a network device transmits the additional SIB, receiving, based on the transmission indication information, the additional SIB transmitted by the network device, and performing random access based on the additional SIB and a SIB1. The method eliminates the need to receive a SIB19 after at least one beam revisit period after receiving a SIB 1, shortening random access delay and improving random access efficiency.

BRIEF DESCRIPTION OF THE DRAWINGS

To clearly illustrate the solutions in the embodiments of the present application or the prior art, the drawings used in the description of the embodiments or the prior art are briefly described below. Obviously, the drawings in the following description are only some embodiments of the present application, and other drawings may be obtained according to these drawings without any creative effort for those skilled in the art.

FIG. 1 is a first schematic diagram of a random access method according to an embodiment of the present application;

FIG. 2 is a second schematic diagram of a random access method according to an embodiment of the present application;

FIG. 3 is a first schematic diagram of a slot in which a monitoring occasion is located according to an embodiment of the present application;

FIG. 4 is a second schematic diagram of a slot in which a monitoring occasion is located according to an embodiment of the present application;

FIG. 5 is a first schematic diagram of a random access apparatus according to an embodiment of the present application;

FIG. 6 is a second schematic diagram of a random access apparatus according to an embodiment of the present application;

FIG. 7 is a third schematic diagram of a random access apparatus according to an embodiment of the present application; and

FIG. 8 is a fourth schematic diagram of a random access apparatus according to an embodiment of the present application.

DETAILED DESCRIPTION

In the embodiments of the present application, the term "include" and its variations may refer to open-ended inclusions. The term "or" and its variations may refer to "and/or". In the embodiments of the present application, the terms "first", "second" and the like are used to distinguish similar objects and are not necessarily used to describe a particular sequence or order. In the embodiments of the present application, the term "multiple" refers to two or more than two. In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions provided by the embodiments of the present application may be applicable to various systems, such as a non-terrestrial network (NTN), and a 5G system. For example, the applicable systems may also include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems may include a terminal and a network device, and may also include a core network part, such as an evolved packet system (EPS), a 5G system (5GS), and the like.

The terminal in the embodiments of the present application may be a device that provides voice and/or data connectivity to a user, a hand-held device with a wireless connection function, or other processing device connected to a wireless modem. In different systems, the names of the terminal may be different. For example, in the 5G system, the terminal may be called as user equipment (UE), and legacy UE. A wireless terminal may communicate with one or more core networks (CN) via a radio access network (RAN), and the wireless terminal may be a mobile terminal, such as a mobile phone (or referred to as cellular phone) and a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device in the embodiments of the present application may be a base station, and the base station may include multiple cells providing services for the terminal. Depending on the specific application, the network device may also be called an access point, or may be a device in the access network that communicates with the wireless terminal through one or more sectors on the air interface, or other names. The network device may be used to exchange received air frames with internet protocol (IP) packets, and act as a router between the wireless terminal and the rest of the access network, and the rest of the access network may include an IP communication network. The network device may also coordinate attribute management for the air interface. For example, the network device in the embodiments of the present application may be a base transceiver station (BTS) in a global system for mobile communications (GSM), a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node (relay node), a femto, a pico base station (pico), etc., which are not limited in the embodiments of the present application. In some network structures, the network device may include a centralized unit (CU) node and a distributed unit (DU) node, and the centralized unit and the distributed unit may also be geographically separated.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

In the related art, in beam hopping scenarios in the NTN, since a coverage range of a satellite beam is large and the beam power is limited, the number of beam footprints served by each beam is large and the beam revisit period is long. In a case that the SIB19 is received after at least one beam revisit period after receiving decoded SIB1, the random access delay is increased, resulting in low random access efficiency.

The embodiments of the present application provide a random access method and apparatus for shortening random access latency. In the embodiments of the present application, the random access method and apparatus are based on the same inventive concept. Because the random access method and apparatus solve similar problems, the implementation of the random access apparatus and method may be referenced in conjunction with each other, and any repetitive details will not be repeated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

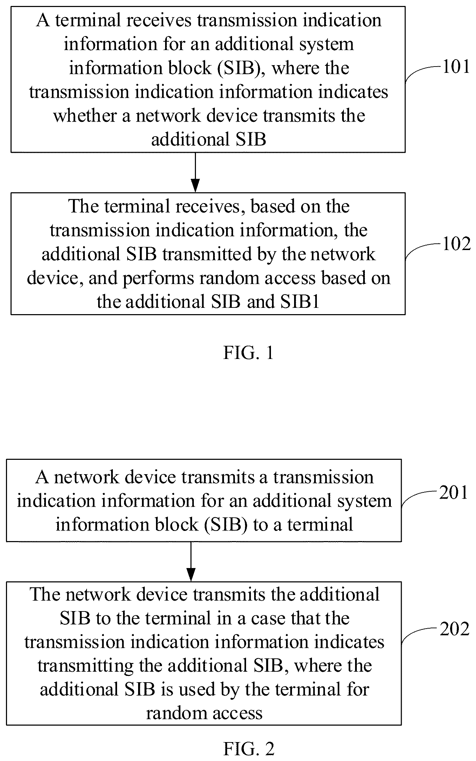

FIG. 1 is a first schematic diagram of a random access method according to an embodiment of the present application. As shown in FIG. 1, the method includes:

S101: a terminal receives transmission indication information for an additional system information block (SIB), where the transmission indication information indicates whether a network device transmits the additional SIB.

In the embodiment of the present application, the additional SIB may be SIB0, SIB22, or other SIB different from that in related art, and is used for access in scenarios not limited to the NTN.

In the embodiment of the present application, the transmission indication information may be a first given value or a second given value.

The first given value and the second given value are different. For example, the first given value may be 0 and the second given value may be 1. In an embodiment, the first given value may be 1 and the second given value may be 2.

In the embodiment of the present application, the first given value may be used to indicate that the network device transmits the additional SIB, while the second given value may be used to indicate that the network device doesn't transmit the additional SIB. In an embodiment, the first given value may be used to indicate that the network device doesn't transmit the additional SIB, while the second given value may be used to indicate that the network device transmits the additional SIB.

In the embodiment of the present application, the additional SIB may include relevant parameters in SIB19.

For example, the additional SIB (referred to as SIB0 in the embodiment of the present application for ease of description) may include at least the following relevant parameters:

$$\text{SIB0 ::= SEQUENCE \{ntn-Config-r17 NTN-Config-r17 OPTIONAL, -- Need R...\}}$$

The ntn-Config provides parameters for terminal access to the NTN, such as a common timing advance (common TA) parameter for uplink synchronization, k_mac and the like.

S102: the terminal receives, based on the transmission indication information, the additional SIB transmitted by the network device, and performs random access based on the additional SIB and a SIB1.

In an embodiment, the terminal receives the additional SIB in a case that the transmission indication information indicates transmitting the additional SIB, and performs random access based on the additional SIB and the SIB1.

In an embodiment, the terminal receives the SIB1 and a SIB19 in a case that the transmission indication information indicates not transmitting the additional SIB, and performs random access based on the SIB1 and the SIB19.

The method of receiving the SIB1 and the SIB 19 and performing random access based on the SIB1 and the SIB19 may be found in the related art and will not be described in detail here.

In the embodiment of the present application, by receiving, based on the transmission indication information, the additional SIB transmitted by the network device, and performing random access based on the additional SIB and a SIB1, there is no need to receive the SIB19 after at least one beam revisit period after receiving a SIB1, shortening random access delay and improving random access efficiency.

In some embodiments, receiving the additional SIB may include:

monitoring, in a slot $(n_0 + 1)$, a first physical downlink control channel (PDCCH) corresponding to the additional SIB, or, monitoring, in a slot that satisfies ( $(n_0 + \lfloor Y \cdot M \rfloor) \mathrm{mod} N_{slot}^{frame,\mu}$ ), a first physical downlink control channel (PDCCH) corresponding to the additional SIB, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

receiving the additional SIB on time-frequency domain resources indicated by the first PDCCH.

In some embodiments, the random access method performed by the terminal may further include:

monitoring, in a slot $n_0$, a second PDCCH corresponding to the SIB1; and

receiving the SIB1 on time-frequency domain resources indicated by the second PDCCH.

In some embodiments, performing random access based on the additional SIB and the SIB1 may include:

determining NTN-related random access parameters based on the additional SIB and the SIB1; and

performing random access based on the NTN-related random access parameters.

In some embodiments, after obtaining the NTN-related random access parameters, a random access preamble is transmitted on the corresponding time-frequency domain resources, thereby completing random access process.

In some embodiments, the random access method performed by the terminal may further include:

monitoring a PDCCH corresponding to the SIB1 in slots $n_0$ and $(n_0+1)$ in a case that the transmission indication information indicates that the network device doesn't transmit the additional SIB;

receiving the SIB1 on the time-frequency domain resources indicated by the PDCCH corresponding to the SIB1; and

performing random access based on the SIB1 and the SIB19.

FIG. 2 is a second schematic diagram of a random access method according to an embodiment of the present application. As shown in FIG. 2, the method includes:

S201: a network device transmits transmission indication information for an additional system information block (SIB) to a terminal;

S202: the network device transmits the additional SIB to the terminal in a case that the transmission indication information indicates transmitting the additional SIB, where the additional SIB is used by the terminal for random access.

In the embodiment of the present application, the network device transmits the transmission indication information for the additional system message block (SIB) to the terminal, and the network device transmits the additional SIB to the terminal in a case that the transmission indication information indicates transmitting the additional SIB, such that the terminal perform random access process quickly, shortening random access delay.

In some embodiments, the network device transmits the additional SIB to the terminal may include:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \mathrm{mod} N_{slot}^{frame,\mu}$ ), a first physical downlink control channel (PDCCH) corresponding to the additional SIB to the terminal, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

In some embodiments, the random access method performed by the network device may further include:

transmitting, in a slot $n_0$, a second PDCCH corresponding to the SIB1 to the terminal; and

transmitting, to the terminal, the SIB1 on time-frequency domain resources indicated by the second PDCCH.

In some embodiments, the random access method performed by the network device may further include:

transmitting a PDCCH corresponding to the SIB1 in slots $n_0$ and $(n_0+1)$ in a case that the transmission indication information indicates not transmitting the additional SIB; and

transmitting the SIB1 on the time-frequency domain resources indicated by the PDCCH corresponding to the SIB1.

In the embodiment of the present application, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

For example, the transmission indication information may be indicated by the reserved bits (e.g., 1 bit) in the MIB.
For example, the transmission indication information may be indicated by the additional bits (e.g., 1 bit) in the MIB.
For example, in a case that the transmission indication information is indicated by the reserved bits (e.g., 1 bit) in the PBCH, the reserved bits (for message extension spare) in the PBCH may be reinterpreted so that the reserved bits indicate the transmission indication information.
For example, the transmission indication information may be indicated by the additional bits (e.g., 1 bit) in the PBCH.
It should be noted that, in the case of using the reserved bits or the additional bits in the MIB, or the reserved bits or the additional bits in the PBCH for indication, the "system information indicator field" in the DCI field is set to 1. By the above setting, in a case that a base station transmits SIB0 in a slot $n_0 + 1$, because the terminal (such as a legacy UE) may not receive the transmission indication information, it receives the PDCCH of SIB0 in the slot $n_0 + 1$, and it may be determined, by demodulating the PDCCH, that the network device does not transmit SIB1 in the slot, and therefore will not receive the physical downlink shared channel (PDSCH) corresponding to the PDCCH.
For example, in a case that the reserved bits in the DCI indicate the transmission indication information, 1 bit of the reserved bits in the DCI format 1_0 scrambled with system information-RNTI (SI-RNTI) may be reinterpreted so that the 1 bit indicates the transmission indication information.
For example, the additional bit (e.g., 1 bit) in the DCI may be used to indicate the transmission indication information.
In an embodiment, the value of the 1 bit may be a first given value or a second given value.
In an embodiment, in the case of reinterpretation, the corresponding DCI field may be modified according to Table 1 below.

Table 1

| Current | Reinterpretation |
|---|---|
| System information indicator: 1 bit | System information indicator: 1 bit |
| Reserved bits: 17 or 15 bits | Transmission information indicator for an additional SIB: 1 bit |
| | Reserved bits: 16 or 14 bits |

In a case that system information is jointly indicated by 2 bits, for legacy UEs, the system information transmitted is determined by 1 bit of the system information indicator. For example, the 1 bit of the system information indicator is set to 0, indicating the transmission of SIB1; the 1 bit of the system information indicator is set to 1, indicating the transmission of system information other than SIB1. For new terminals, the type of system information transmitted is determined by the system information indicator and the additional 1 bit (totally 2 bits).

For example, the 2-bit joint indication is shown in Table 2.

Table 2

| System information indicator | Transmission indication information for an additional SIB | System information actually transmitted |
|---|---|---|
| 0 | 0 | SIB1 |
| 0 | 1 | Invalid indicator |
| 1 | 0 | SI information |
| 1 | 1 | SIB0 |

In an embodiment of the present application, the time-frequency domain resources of the first PDCCH and the time-frequency domain resources of the second PDCCH are indicated by control resource set zero (e.g., CORESET#0) and search space zero (e.g., search space#0) in higher layer parameters (e.g., PDCCH-ConfigSIB1 IE).

The PDCCH-ConfigSIB1 IE is included in the master information block (MIB).

In an embodiment of the present application, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

For example, the predefined resource configuration tables include the following Table 3 and Table 4.

Table 3 shows the configuration for CORESET#0, and Table 4 shows the configuration for search space#0 in a case that SS/PBCH block and CORESETmultiplexing pattern is 1.

Table 3

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |

(continued)

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Table 4

| Index | O | Number of search space sets per slot | M | First symbol index |
|---|---|---|---|---|
| 0 | 0 | 1 | 1 | 0 |
| 1 | 0 | 2 | 1/2 | $\{0, i \text{ is even}\}, \{ N_{symb}^{CORESET}, \text{ if } i \text{ is odd}\}$ |
| 2 | 2 | 1 | 1 | 0 |
| 3 | 2 | 2 | 1/2 | $\{0, \text{ if } i \text{ is even}\}, \{ N_{symb}^{CORESET}, \text{ if } i \text{ is odd}\}$ |
| 4 | 5 | 1 | 1 | 0 |
| 5 | 5 | 2 | 1/2 | $\{0, \text{ if } i \text{ is even}\}, \{ N_{symb}^{CORESET}, \text{ if } i \text{ is odd}\}$ |
| 6 | 7 | 1 | 1 | 0 |
| 7 | 7 | 2 | 1/2 | $\{0, \text{ if } i \text{ is even}\}, \{ N_{symb}^{CORESET}, \text{ if } i \text{ is odd}\}$ |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

In an embodiment of the present application, a Type 0-PDCCH CSS of a synchronization signal/PBCH Block (SSB) is configured within a monitoring occasion with two slots. The mapping between the SSB index i and $n_0$ is:

$$n_0 = (O \cdot 2^\mu + \lfloor i \cdot M \rfloor) \bmod N_{\text{slot}}^{\text{frame},\mu},$$

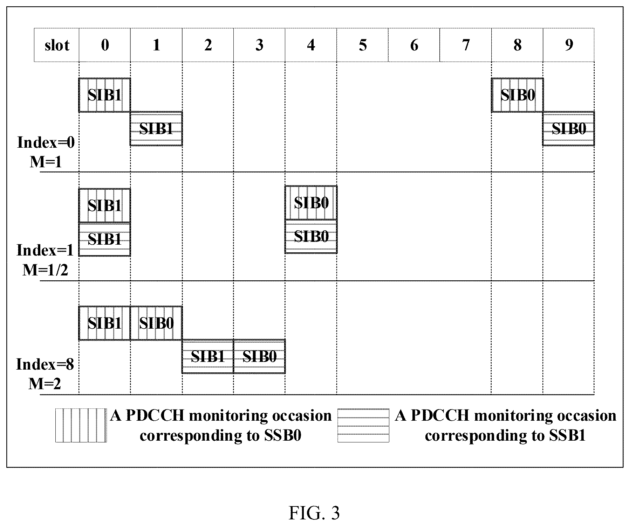

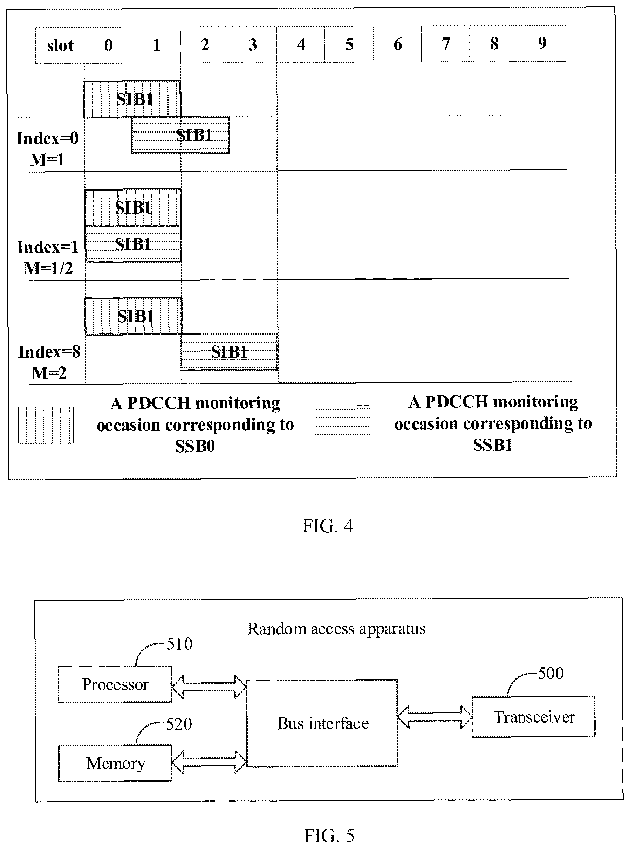

where $n_0$ is the index of a first slot $n_0$ of the Type0-PDCCH CSS monitoring occasion in a radio frame, $\mu$ is the configuration of subcarrier spacing, i is the index of the SSB signal, $N_{\text{slot}}^{\text{frame},\mu}$ is the number of slots in each frame, mod is a modulo operator, M is used to control a degree of overlap between the monitoring occasions of SSB i and SSB i+1, and $\lfloor \cdot \rfloor$ is a floor operator. For example, if i is equal to 0, M is used to control the degree of overlap between the monitoring occasions of SSB0 and SSB1 (see FIGS. 3 and 4).

In the case of $\left\lfloor (O \cdot 2^\mu + \lfloor i \cdot M \rfloor) / N_{\text{slot}}^{\text{frame},\mu} \right\rfloor \bmod 2 = 0$, $n_0$ is mapped to a first radio frame of 20ms, that is $SFN_c \bmod 2 = 0$ ($SFN_c$ is the system frame number that meets the requirements); otherwise, $n_0$ is mapped to a second radio frame of 20ms.

In a case that an additional SIB is transmitted, the Type0-PDCCH CSS is a search space for the first and/or second PDCCH. In a case that no additional SIB is transmitted, the Type0-PDCCH CSS is a search space for the PDCCH corresponding to the SIB1.

In a case that the transmission indication information indicates transmitting an additional SIB, the following example illustrates the PDCCH monitoring occasion corresponding to an SSB, using Y = 8, the index in Table 4 being 0, 1, or 8, and M being 1, 2, or 1/2, in conjunction with FIG. 3.

FIG. 3 is a first schematic diagram of a slot in which a monitoring occasion is located according to an embodiment of the present application. As shown in FIG. 3, for example, there are three different scenarios for a PDCCH monitoring occasion corresponding to SSB0 and a PDCCH monitoring occasion corresponding to SSB1.

The PDCCH monitoring occasions corresponding to the SSB0 and the PDCCH monitoring occasions corresponding to the SSB1 both include a PDCCH monitoring occasion for the SIB1 and a PDCCH monitoring occasion for an additional SIB (e.g., the SIBO).

A slot in which the PDCCH monitoring occasion for the SIB1 is located is the slot in which a terminal monitors a second PDCCH. A slot in which the PDCCH monitoring occasion for the additional SIB is located is the slot in which the terminal monitors a first PDCCH.

In an embodiment of the present application, the three different scenarios include: Index = 0 and M = 1, Index = 1 and M = 1/2, and Index = 8 and M = 2.

In a case that Index = 0 and M = 1, for the SSB0, the PDCCH monitoring occasion for the SIB1 is in slot 0, and the PDCCH monitoring occasion for the SIB0 is in slot 8; for the SSB1, the PDCCH monitoring occasion for the SIB1 is in slot 1, and the PDCCH monitoring occasion for the SIB0 is in slot 9.

In a case that Index = 1 and M = 1/2, for the SSB0, the PDCCH monitoring occasion for the SIB1 is in slot 0, and the PDCCH monitoring occasion for the SIB0 is in slot 4; for the SSB1, the PDCCH monitoring occasion for the SIB1 is in slot 0, and the PDCCH monitoring occasion for the SIB0 is in slot 4.

In a case that Index = 8 and M = 2, for the SSB0, the PDCCH monitoring occasion for the SIB1 is in slot 0, and the PDCCH monitoring occasion for the SIB0 is in slot 1; for the SSB1, the PDCCH monitoring occasion for the SIB1 is in slot 2, and the PDCCH monitoring occasion for the SIB0 is in slot 3.

In a case that the transmission indication information indicates not transmitting an additional SIB, the following example illustrates the PDCCH monitoring occasion corresponding to an SSB, using Y = 8, the index in Table 4 being 0, 1, or 8, and M being 1, 2, or 1/2, in conjunction with FIG. 4.

FIG. 4 is a second schematic diagram of a slot in which a monitoring occasion is located according to an embodiment of the present application. As shown in FIG. 4, for example, there are three different scenarios for a PDCCH monitoring occasion corresponding to SSB0 and a PDCCH monitoring occasion corresponding to SSB1.

The PDCCH monitoring occasion corresponding to the SSB0 and the PDCCH monitoring occasion corresponding to the SSB1 both include the PDCCH monitoring occasion for the SIB1.

In a case that Index = 0 and M = 1, for the SSB0, the PDCCH monitoring occasion for the SIB1 is in slot 0 and slot 1; for the SSB1, the PDCCH monitoring occasion for the SIB1 is in slot 1 and slot 2.

In a case that Index = 1 and M = 1/2, for the SSB0, the PDCCH monitoring occasion for the SIB1 is in slot 0 and slot 1; for the SSB1, the PDCCH monitoring occasion for the SIB1 is in slot 0 and slot 1.

In a case that Index = 8 and M = 2, for the SSB0, the PDCCH monitoring occasion for the SIB1 is in slot 0 and slot 1; for the SSB1, the PDCCH monitoring occasion for the SIB1 is in slot 2 and slot 3.

FIG. 5 is a first schematic diagram of a random access apparatus according to an embodiment of the present application. As shown in FIG. 5, the apparatus includes a memory 520, a transceiver 500, and a processor 510.

The memory 520 is used for storing a computer program; the transceiver 500 is used for receiving and transmitting data under control of the processor 510; and the processor 510 is used for reading the computer program in the memory 520 and performing following operations:

receiving transmission indication information for an additional system information block (SIB), where the transmission indication information indicates whether a network device transmits the additional SIB; and

receiving, based on the transmission indication information, the additional SIB transmitted by the network device, and performing random access based on the additional SIB and a SIB 1.

In some embodiments, the transceiver 500 is used for receiving and transmitting data under the control of the processor 510.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits. These are well known in the art and therefore will not be described further in the present application. The bus interface provides an interface. The transceiver 500 may be multiple elements, i.e., including a transmitter and a receiver, providing units for communicating with various other devices over transmission media including wireless channels, wired channels, fiber optic cables, and the like. For different user equipment, the user interface 530 may also be an interface capable of externally or internally connecting the required equipment, and the connected equipment includes, but not limited to, a keypad, a display, a speaker, a microphone, a joystick, and the like.

The processor 510 is responsible for managing the bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA), or a complex programmable logic device (CPLD), and the processor may also take the form of a multi-core architecture.

The processor is configured to execute any of the methods provided by the embodiments of the present application according to the obtained executable instructions by calling the computer program stored in the memory. The processor and the memory may also be physically separate.

In an embodiment, receiving, based on the transmission indication information, the additional SIB transmitted by the network device may include:

receiving the additional SIB in a case that the transmission indication information indicates transmitting the additional SIB.

In an embodiment, receiving the additional SIB may include:

monitoring, in a slot ($n_0 + 1$), a first physical downlink control channel (PDCCH) corresponding to the additional SIB, or, monitoring, in a slot that satisfies ( $(n_0 + \lfloor Y \cdot M \rfloor) mod N_{slot}^{frame,\mu}$ ), a first physical downlink control channel (PDCCH) corresponding to the additional SIB, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

receiving the additional SIB on time-frequency domain resources indicated by the first PDCCH.

In an embodiment, the processor 510 is further used for:

monitoring, in a slot $n_0$, a second PDCCH corresponding to the SIB1; and
receiving the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In an embodiment, performing random access based on the additional SIB and the SIB1 may include:

determining NTN-related random access parameters based on the additional SIB and the SIB1; and

performing random access based on the NTN-related random access parameters.

It should be noted here that the random access apparatus provided in the embodiments of the present application may implement all the method steps implemented by the method embodiments in which the execution subject is a terminal, and may achieve the same effects. The same parts and beneficial effects in the embodiments as those in the method embodiments are not described in detail.

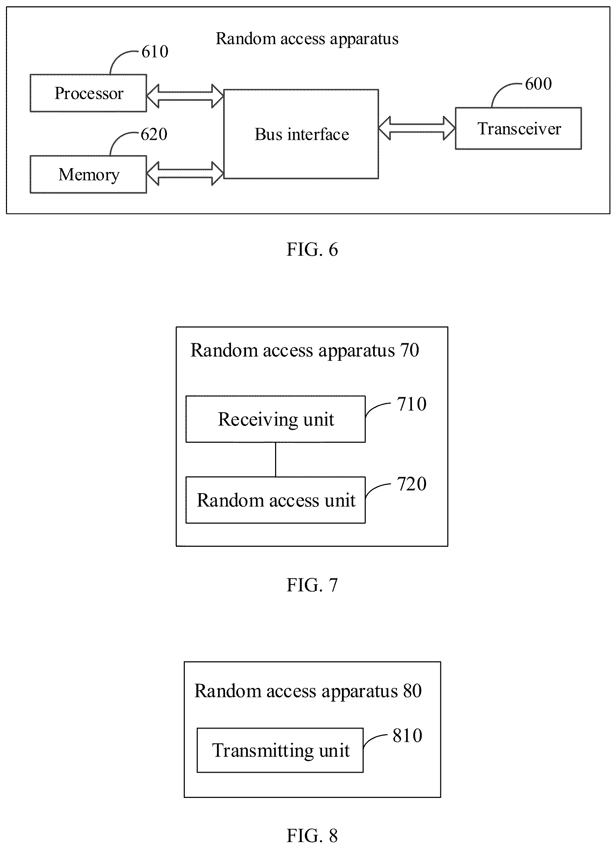

FIG. 6 is a second schematic diagram of a random access apparatus according to an embodiment of the present application. As shown in FIG. 6, the apparatus includes a memory 620, a transceiver 600, and a processor 610.

Where the memory 620 is used for storing a computer program; the transceiver 600 is used for receiving and transmitting data under control of the processor 610; and the processor 610 is used for reading the computer program in the memory 620 and performing following operations:

transmitting transmission indication information for an additional system information block (SIB) to a terminal; and

transmitting the additional SIB to the terminal in a case that the transmission indication information indicates transmitting the additional SIB, where the additional SIB is used by the terminal for random access.

In an embodiment, the transceiver 600 is used for receiving and transmitting data under the control of the processor 610.

In FIG. 6, a bus architecture may include any number of interconnected buses and bridges, which are linked together through various circuits of one or more processors represented by the processor 610 and one or more memories represented by the memory 620. The bus architecture may also link together various other circuits, such as peripherals, voltage regulators, and power management circuits. These are well known in the art and therefore will not be described further in the present application. The bus interface provides an interface. The transceiver 600 may be multiple elements, i.e., including a transmitter and a receiver, providing units for communicating with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), and the processor may also take the form of a multi-core architecture.

In an embodiment, transmitting the additional SIB to the terminal may include:

transmitting, in a slot ($n_0 + 1$), a first physical downlink control channel (PDCCH) corresponding to the additional SIB to the terminal, or, transmitting, in a slot that satisfies ( $(n_0 + \lfloor Y \cdot M \rfloor) \bmod N_{slot}^{frame,\mu}$ ), a first physical downlink control channel (PDCCH) corresponding to the additional SIB to the terminal, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

In an embodiment, the processor 610 is further used for:

transmitting, in a slot $n_0$, a second PDCCH corresponding to the SIB1 to the terminal; and

transmitting, to the terminal, the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

It should be noted here that the random access apparatus provided in the embodiments of the present application may implement all the method steps implemented by the method embodiments in which the execution subject is a network device, and may achieve the same effects. The same parts and beneficial effects in the embodiments as those in the method embodiments are not described in detail.

FIG. 7 is a third schematic diagram of a random access apparatus according to an embodiment of the present application. As shown in FIG. 7, the random access apparatus 70 is used in a terminal, and the random access apparatus 70 includes:

a receiving unit 710, used for receiving transmission indication information for an additional system information block (SIB), where the transmission indication information indicates whether a network device transmits the additional SIB,

the receiving unit 710 being further used for receiving, based on the transmission indication information, the additional SIB transmitted by the network device; and

a random access unit 720, used for performing random access based on the additional SIB and a SIB1.

In an embodiment, the receiving unit 710 is further used for:
receiving the additional SIB in a case that the transmission indication information indicates transmitting the additional SIB.

In an embodiment, the receiving unit 710 is further used for:

monitoring, in a slot ($n_0$ + 1), a first physical downlink control channel (PDCCH) corresponding to the additional SIB, or, monitoring, in a slot that satisfies ( $(n_0 + \lfloor Y \cdot M \rfloor) \mathrm{mod} N_{slot}^{frame,\mu}$ ), a first physical downlink control channel (PDCCH) corresponding to the additional SIB, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

receiving the additional SIB on time-frequency domain resources indicated by the first PDCCH.

In an embodiment, the receiving unit 710 is further used for:

monitoring, in a slot $n_0$, a second PDCCH corresponding to the SIB1; and

receiving the SIB1 on time-frequency domain resources indicated by the second PDCCH.

In an embodiment, the time-frequency domain resources of the first PDCCH and the time-frequency domain resources of the second PDCCH are indicated by control resource set zero and search space zero in higher layer parameters.
In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

In an embodiment, the random access unit 720 is further used for:

determining NTN-related random access parameters based on the additional SIB and the SIB1; and

performing random access based on the NTN-related random access parameters.

It should be noted here that the apparatus provided in the embodiments of the present application may implement all the method steps implemented by the method embodiments in which the execution subject is a terminal, and may achieve the same effects. The same parts and beneficial effects in the embodiments as those in the method embodiments are not described in detail.

FIG. 8 is a fourth schematic diagram of a random access apparatus according to an embodiment of the present application. As shown in FIG. 8, the random access apparatus 80 is used in a network device, and the random access apparatus 80 includes:

a transmitting unit 810, used for transmitting transmission indication information for an additional system information block (SIB) to a terminal,

the transmitting unit 810 being further used for transmitting the additional SIB to the terminal in a case that the transmission indication information indicates transmitting the additional SIB, where the additional SIB is used by the terminal for random access.

In an embodiment, the transmitting unit 810 is further used for:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \bmod N_{slot}^{frame,\mu}$ ), a first physical downlink control channel (PDCCH) corresponding to the additional SIB to the terminal, where $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

In an embodiment, the transmitting unit 810 is further used for:

transmitting, in a slot $n_0$, a second PDCCH corresponding to the SIB1 to the terminal; and

transmitting, to the terminal, the SIB1 on time-frequency domain resources indicated by the second PDCCH.

In an embodiment, the time-frequency domain resources of the first PDCCH and the time-frequency domain resources of the second PDCCH are indicated by control resource set zero (CORESET#0) and search space zero (search space#0) in higher layer parameters.

In an embodiment, there is one or more of the following associations between the time-frequency domain resources of the first PDCCH and the time-frequency domain resources of the second PDCCH:

a predefined resource configuration table of the time-frequency domain resources of the first PDCCH and a predefined resource configuration table of the time-frequency domain resources of the second PDCCH are same;

in a predefined resource configuration table of the time-frequency domain resources of the first PDCCH and a predefined resource configuration table of the time-frequency domain resources of the second PDCCH, row indexes indicating the time-frequency domain resources of the first PDCCH and the time-frequency domain resources of the second PDCCH are same;

the time-frequency domain resources of the first PDCCH and the time-frequency domain resources of the second PDCCH occupy a same frequency domain resource block; or

the time-frequency domain resources of the first PDCCH and the time-frequency domain resources of the second PDCCH occupy a same orthogonal frequency division multiplexing (OFDM) symbol in different slots.

In an embodiment, the transmission indication information is indicated by one or more of:

reserved bits in a master information block (MIB);

additional bits in a master information block (MIB);

reserved bits in a physical broadcast channel (PBCH);

additional bits in a physical broadcast channel (PBCH);

reserved bits in downlink control information (DCI); or

additional bits in downlink control information (DCI).

It should be noted here that the apparatus provided in the embodiments of the present application may implement all the method steps implemented by the method embodiments in which the execution subject is a terminal, and may achieve the same effects. The same parts and beneficial effects in the embodiments as those in the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In a case that the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application also provides a processor readable storage medium storing a computer program, where the computer program is used for causing the processor to perform the random access method of the terminal side in each of the above embodiments. The random access method includes: receiving transmission indication information of an additional system information block (SIB), where the transmission indication information indicates whether a network device transmits the additional SIB, receiving, based on the transmission indication information, the additional SIB transmitted by the network device, and performing random access based on the additional SIB and a SIB 1.

An embodiment of the present application also provides a processor readable storage medium storing a computer program, where the computer program is used for causing the processor to perform the random access method of the network device side in each of the above embodiments. The random access method includes: transmitting transmission indication information for an additional system information block (SIB) to a terminal; and transmitting the additional SIB to the terminal in a case that the transmission indication information indicates transmitting the additional SIB, where the additional SIB is used by the terminal for random access.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, nonvolatile memory (NAND FLASH), solid-state drive (SSD)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1.  A random access method, performed by a terminal, the method comprising:

    receiving transmission indication information for an additional system information block (SIB), wherein the transmission indication information indicates whether a network device transmits the additional SIB; and
    receiving, based on the transmission indication information, the additional SIB transmitted by the network device, and performing random access based on the additional SIB and a SIB1.

2.  The method of claim 1, wherein receiving, based on the transmission indication information, the additional SIB transmitted by the network device comprises:
    receiving the additional SIB in a case that the transmission indication information indicates transmitting the additional SIB.

3.  The method of claim 2, wherein receiving the additional SIB comprises:

    monitoring, in a slot ($n_0 + 1$), a first physical downlink control channel (PDCCH) corresponding to the additional SIB, or, monitoring, in a slot that satisfies ( $(n_0 + \lfloor Y \cdot M \rfloor) \bmod N_{slot}^{frame,\mu}$ ), a first physical downlink control channel (PDCCH) corresponding to the additional SIB, wherein $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and
    receiving the additional SIB on time-frequency domain resources indicated by the first PDCCH.

4.  The method of claim 3, wherein the method further comprises:

monitoring, in a slot n$_0$, a second PDCCH corresponding to the SIB1; and
receiving the SIB1 on time-frequency domain resources indicated by the second PDCCH.

5. The method of claim 4, wherein the time-frequency domain resources indicated by the first PDCCH and the time-frequency domain resources indicated by the second PDCCH are indicated by control resource set zero and search space zero in higher layer parameters.

6. The method of claim 5, wherein there is one or more of the following associations between the time-frequency domain resources indicated by the first PDCCH and the time-frequency domain resources indicated by the second PDCCH:

a predefined resource configuration table of the time-frequency domain resources indicated by the first PDCCH and a predefined resource configuration table of the time-frequency domain resources indicated by the second PDCCH are same;
in a predefined resource configuration table of the time-frequency domain resources indicated by the first PDCCH and a predefined resource configuration table of the time-frequency domain resources indicated by the second PDCCH, row indexes indicating the time-frequency domain resources indicated by the first PDCCH and the time-frequency domain resources indicated by the second PDCCH are same;
the time-frequency domain resources indicated by the first PDCCH and the time-frequency domain resources indicated by the second PDCCH occupy a same frequency domain resource block; or
the time-frequency domain resources indicated by the first PDCCH and the time-frequency domain resources indicated by the second PDCCH occupy a same orthogonal frequency division multiplexing (OFDM) symbol in different slots.

7. The method of any of claims 1 to 6, wherein the transmission indication information is indicated by one or more of:

reserved bits in a master information block (MIB);
additional bits in a master information block (MIB);
reserved bits in a physical broadcast channel (PBCH);
additional bits in a physical broadcast channel (PBCH);
reserved bits in downlink control information (DCI); or
additional bits in downlink control information (DCI).

8. The method of any of claims 1 to 7, wherein performing random access based on the additional SIB and the SIB1 comprises:

determining non-terrestrial network (NTN)-associated random access parameters based on the additional SIB and the SIB1; and
performing random access based on the NTN-related random access parameters.

9. A random access method, performed by a network device, the method comprising:

transmitting transmission indication information for an additional system information block (SIB) to a terminal; and
transmitting the additional SIB to the terminal in a case that the transmission indication information indicates transmitting the additional SIB, wherein the additional SIB is used by the terminal for random access.

10. The method of claim 9, wherein transmitting the additional SIB to the terminal comprises:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \bmod N_{slot}^{frame,\mu}$ ), a first physical downlink control channel (PDCCH) corresponding to the additional SIB to the terminal, wherein n$_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and
transmitting, to the terminal, the additional SIB on time-frequency domain resources indicated by the first PDCCH.

11. The method of claim 10, wherein the method further comprises:

transmitting, in a slot $n_0$, a second PDCCH corresponding to the SIB1 to the terminal; and
transmitting, to the terminal, the SIB1 on time-frequency domain resources indicated by the second PDCCH.

12. The method of claim 11, wherein the time-frequency domain resources indicated by the first PDCCH and the time-frequency domain resources indicated by the second PDCCH are indicated by control resource set zero and search space zero in higher layer parameters.

13. The method of claim 12, wherein there is one or more of the following associations between the time-frequency domain resources indicated by the first PDCCH and the time-frequency domain resources indicated by the second PDCCH:

a predefined resource configuration table of the time-frequency domain resources indicated by the first PDCCH and a predefined resource configuration table of the time-frequency domain resources indicated by the second PDCCH are same;
in a predefined resource configuration table of the time-frequency domain resources indicated by the first PDCCH and a predefined resource configuration table of the time-frequency domain resources indicated by the second PDCCH, row indexes indicating the time-frequency domain resources indicated by the first PDCCH and the time-frequency domain resources indicated by the second PDCCH are same;
the time-frequency domain resources indicated by the first PDCCH and the time-frequency domain resources indicated by the second PDCCH occupy a same frequency domain resource block; or
the time-frequency domain resources indicated by the first PDCCH and the time-frequency domain resources indicated by the second PDCCH occupy a same orthogonal frequency division multiplexing (OFDM) symbol in different slots.

14. The method of any of claims 9 to 13, wherein the transmission indication information is indicated by one or more of:

reserved bits in a master information block (MIB);
additional bits in a master information block (MIB);
reserved bits in a physical broadcast channel (PBCH);
additional bits in a physical broadcast channel (PBCH);
reserved bits in downlink control information (DCI); or
additional bits in downlink control information (DCI).

15. A random access apparatus, comprising: a memory, a transceiver, and a processor,
wherein the memory is used for storing a computer program; the transceiver is used for receiving and transmitting data under control of the processor; and the processor is used for reading the computer program in the memory and performing following operations:

receiving transmission indication information for an additional system information block (SIB), wherein the transmission indication information indicates whether a network device transmits the additional SIB; and
receiving, based on the transmission indication information, the additional SIB transmitted by the network device, and performing random access based on the additional SIB and a SIB1.

16. The apparatus of claim 15, wherein receiving, based on the transmission indication information, the additional SIB transmitted by the network device comprises:
receiving the additional SIB in a case that the transmission indication information indicates transmitting the additional SIB.

17. The apparatus of claim 16, wherein receiving the additional SIB comprises:

monitoring, in a slot $(n_0 + 1)$, a first physical downlink control channel (PDCCH) corresponding to the additional SIB, or, monitoring, in a slot that satisfies ( $(n_0 + \lfloor Y \cdot M \rfloor) \bmod N_{slot}^{frame,\mu}$ ), a first physical downlink control channel (PDCCH) corresponding to the additional SIB, wherein $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

receiving the additional SIB on time-frequency domain resources indicated by the first PDCCH.

18. The apparatus of claim 17, wherein the processor further performs following operations:

monitoring, in a slot $n_0$, a second PDCCH corresponding to the SIB1; and
receiving the SIB1 on time-frequency domain resources indicated by the second PDCCH.

19. The apparatus of claim 18, wherein the time-frequency domain resources indicated by the first PDCCH and the time-frequency domain resources indicated by the second PDCCH are indicated by control resource set zero and search space zero in higher layer parameters.

20. The apparatus of claim 19, wherein there is one or more of the following associations between the time-frequency domain resources indicated by the first PDCCH and the time-frequency domain resources indicated by the second PDCCH:

a predefined resource configuration table of the time-frequency domain resources indicated by the first PDCCH and a predefined resource configuration table of the time-frequency domain resources indicated by the second PDCCH are same;
in a predefined resource configuration table of the time-frequency domain resources indicated by the first PDCCH and a predefined resource configuration table of the time-frequency domain resources indicated by the second PDCCH, row indexes indicating the time-frequency domain resources indicated by the first PDCCH and the time-frequency domain resources indicated by the second PDCCH are same;
the time-frequency domain resources indicated by the first PDCCH and the time-frequency domain resources indicated by the second PDCCH occupy a same frequency domain resource block; or
the time-frequency domain resources indicated by the first PDCCH and the time-frequency domain resources indicated by the second PDCCH occupy a same orthogonal frequency division multiplexing (OFDM) symbol in different slots.

21. The apparatus of any of claims 15 to 20, wherein the transmission indication information is indicated by one or more of:

reserved bits in a master information block (MIB);
additional bits in a master information block (MIB);
reserved bits in a physical broadcast channel (PBCH);
additional bits in a physical broadcast channel (PBCH);
reserved bits in downlink control information (DCI); or
additional bits in downlink control information (DCI).

22. The apparatus of any of claims 15 to 21, wherein performing random access based on the additional SIB and the SIB1 comprises:

determining NTN-related random access parameters based on the additional SIB and the SIB1; and
performing random access based on the NTN-related random access parameters.

23. A random access apparatus, comprising: a memory, a transceiver, and a processor,
wherein the memory is used for storing a computer program; the transceiver is used for receiving and transmitting data under control of the processor; and the processor is used for reading the computer program in the memory and performing following operations:

transmitting transmission indication information for an additional system information block (SIB) to a terminal; and
transmitting the additional SIB to the terminal in a case that the transmission indication information indicates transmitting the additional SIB, wherein the additional SIB is used by the terminal for random access.

24. The apparatus of claim 23, wherein transmitting the additional SIB to the terminal comprises:

transmitting, in a slot $(n_0 + 1)$, a first physical downlink control channel (PDCCH) corresponding to the additional SIB to the terminal, or, transmitting, in a slot that satisfies ( $(n_0 + \lfloor Y \cdot M \rfloor) \bmod N_{slot}^{frame,\mu}$ ), a first physical downlink control channel (PDCCH) corresponding to the additional SIB to the terminal, wherein $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

25. The apparatus of claim 24, wherein the processor is further used for:

transmitting, in a slot $n_0$, a second PDCCH corresponding to the SIB1 to the terminal; and
transmitting, to the terminal, the SIB1 on time-frequency domain resources indicated by the second PDCCH.

26. The apparatus of claim 25, wherein the time-frequency domain resources indicated by the first PDCCH and the time-frequency domain resources indicated by the second PDCCH are indicated by control resource set zero and search space zero in higher layer parameters.

27. The apparatus of claim 26, wherein there is one or more of the following associations between the time-frequency domain resources indicated by the first PDCCH and the time-frequency domain resources indicated by the second PDCCH:

a predefined resource configuration table of the time-frequency domain resources indicated by the first PDCCH and a predefined resource configuration table of the time-frequency domain resources indicated by the second PDCCH are same;
in a predefined resource configuration table of the time-frequency domain resources indicated by the first PDCCH and a predefined resource configuration table of the time-frequency domain resources indicated by the second PDCCH, row indexes indicating the time-frequency domain resources indicated by the first PDCCH and the time-frequency domain resources indicated by the second PDCCH are same;
the time-frequency domain resources indicated by the first PDCCH and the time-frequency domain resources indicated by the second PDCCH occupy a same frequency domain resource block; or
the time-frequency domain resources indicated by the first PDCCH and the time-frequency domain resources indicated by the second PDCCH occupy a same orthogonal frequency division multiplexing (OFDM) symbol in different slots.

28. The apparatus of any of claims 23 to 27, wherein the transmission indication information is indicated by one or more of:

reserved bits in a master information block (MIB);
additional bits in a master information block (MIB);
reserved bits in a physical broadcast channel (PBCH);
additional bits in a physical broadcast channel (PBCH);
reserved bits in downlink control information (DCI); or
additional bits in downlink control information (DCI).

29. A random access apparatus, used in a terminal, the apparatus comprising:

a receiving unit, used for receiving transmission indication information for an additional system information block (SIB), wherein the transmission indication information indicates whether a network device transmits the additional SIB,
the receiving unit being further used for receiving, based on the transmission indication information, the additional SIB transmitted by the network device; and
a random access unit, used for performing random access based on the additional SIB and a SIB1.

30. The apparatus of claim 29, wherein the receiving unit is further used for:
receiving the additional SIB in a case that the transmission indication information indicates transmitting the additional SIB.

31. The apparatus of claim 30, wherein the receiving unit is further used for:

monitoring, in a slot ($n_0$ + 1), a first physical downlink control channel (PDCCH) corresponding to the additional SIB, or, monitoring, in a slot that satisfies ( $(n_0 + \lfloor Y \cdot M \rfloor) mod N_{slot}^{frame,\mu}$ ), a first physical downlink control channel (PDCCH) corresponding to the additional SIB, wherein $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and
receiving the additional SIB on time-frequency domain resources indicated by the first PDCCH.

32. The apparatus of claim 31, wherein the receiving unit is further used for:

monitoring, in a slot $n_0$, a second PDCCH corresponding to the SIB1; and
receiving the SIB1 on time-frequency domain resources indicated by the second PDCCH.

33. The apparatus of claim 32, wherein the time-frequency domain resources indicated by the first PDCCH and the time-frequency domain resources indicated by the second PDCCH are indicated by control resource set zero and search space zero in higher layer parameters.

34. The apparatus of claim 33, wherein there is one or more of the following associations between the time-frequency domain resources indicated by the first PDCCH and the time-frequency domain resources indicated by the second PDCCH:

a predefined resource configuration table of the time-frequency domain resources indicated by the first PDCCH and a predefined resource configuration table of the time-frequency domain resources indicated by the second PDCCH are same;
in a predefined resource configuration table of the time-frequency domain resources indicated by the first PDCCH and a predefined resource configuration table of the time-frequency domain resources indicated by the second PDCCH, row indexes indicating the time-frequency domain resources indicated by the first PDCCH and the time-frequency domain resources indicated by the second PDCCH are same;
the time-frequency domain resources indicated by the first PDCCH and the time-frequency domain resources indicated by the second PDCCH occupy a same frequency domain resource block; or
the time-frequency domain resources indicated by the first PDCCH and the time-frequency domain resources indicated by the second PDCCH occupy a same orthogonal frequency division multiplexing (OFDM) symbol in different slots.

35. The apparatus of any of claims 29 to 34, wherein the transmission indication information is indicated by one or more of:

reserved bits in a master information block (MIB);
additional bits in a master information block (MIB);
reserved bits in a physical broadcast channel (PBCH);
additional bits in a physical broadcast channel (PBCH);
reserved bits in downlink control information (DCI); or
additional bits in downlink control information (DCI).

36. The apparatus of any of claims 29 to 35, wherein the random access unit is further used for:

determining NTN-related random access parameters based on the additional SIB and the SIB1; and
performing random access based on the NTN-related random access parameters.

37. A random access apparatus, used in a network device, the apparatus comprising:

a transmitting unit, used for transmitting transmission indication information for an additional system information block (SIB) to a terminal,
the transmitting unit being further used for transmitting the additional SIB to the terminal in a case that the transmission indication information indicates transmitting the additional SIB, wherein the additional SIB is used by the terminal for random access.

38. The apparatus of claim 37, wherein the transmitting unit is further used for:

transmitting, in a slot $(n_0 + 1)$, a first physical downlink control channel (PDCCH) corresponding to the additional SIB to the terminal, or, transmitting in a slot that satisfies ( $(n_0 + \lfloor Y \cdot M \rfloor) \bmod N_{slot}^{frame,\mu}$ ), a first physical downlink control channel (PDCCH) corresponding to the additional SIB to the terminal, wherein $n_0$ is an index of a first slot in a Type 0 PDCCH common search space (CSS) monitoring occasion within a radio frame, Y is a maximum number of SSBs in each SSB burst set, $\lfloor \cdot \rfloor$ is a floor operator, $N_{slot}^{frame,\mu}$ is a number of slots in each frame, and mod is a modulo operator; and

transmitting, to the terminal, the additional SIB on time-frequency domain resources indicated by the first PDCCH.

39. The apparatus of claim 38, wherein the transmitting unit is further used for:

transmitting, in a slot $n_0$, a second PDCCH corresponding to the SIB1 to the terminal; and

transmitting, to the terminal, the SIB1 on time-frequency domain resources indicated by the second PDCCH.

40. The apparatus of claim 39, wherein the time-frequency domain resources indicated by the first PDCCH and the time-frequency domain resources indicated by the second PDCCH are indicated by control resource set zero and search space zero in higher layer parameters.

41. The apparatus of claim 40, wherein there is one or more of the following associations between the time-frequency domain resources indicated by the first PDCCH and the time-frequency domain resources indicated by the second PDCCH:

a predefined resource configuration table of the time-frequency domain resources indicated by the first PDCCH and a predefined resource configuration table of the time-frequency domain resources indicated by the second PDCCH are same;

in a predefined resource configuration table of the time-frequency domain resources indicated by the first PDCCH and a predefined resource configuration table of the time-frequency domain resources indicated by the second PDCCH, row indexes indicating the time-frequency domain resources indicated by the first PDCCH and the time-frequency domain resources indicated by the second PDCCH are same;

the time-frequency domain resources indicated by the first PDCCH and the time-frequency domain resources indicated by the second PDCCH occupy a same frequency domain resource block; or

the time-frequency domain resources indicated by the first PDCCH and the time-frequency domain resources indicated by the second PDCCH occupy a same orthogonal frequency division multiplexing (OFDM) symbol in different slots.

42. The apparatus of any of claims 37 to 41, wherein the transmission indication information is indicated by one or more of:

reserved bits in a master information block (MIB);
additional bits in a master information block (MIB);
reserved bits in a physical broadcast channel (PBCH);
additional bits in a physical broadcast channel (PBCH);
reserved bits in downlink control information (DCI); or
additional bits in downlink control information (DCI).

43. A processor readable storage medium storing a computer program, wherein the computer program is used for causing a processor to perform the method of any of claims 1 to 8.

44. A processor readable storage medium storing a computer program, wherein the computer program is used for causing a processor to perform the method of any of claims 9 to 14.

A terminal receives transmission indication information for an additional system information block (SIB), where the transmission indication information indicates whether a network device transmits the additional SIB

/— 101

The terminal receives, based on the transmission indication information, the additional SIB transmitted by the network device, and performs random access based on the additional SIB and SIB1

/— 102

FIG. 1

A network device transmits a transmission indication information for an additional system information block (SIB) to a terminal

/— 201

The network device transmits the additional SIB to the terminal in a case that the transmission indication information indicates transmitting the additional SIB, where the additional SIB is used by the terminal for random access

/— 202

FIG. 2

FIG. 3

| slot | 0 | 1 | 2 | 3 | 4 | 5 | 6 | 7 | 8 | 9 |
|------|---|---|---|---|---|---|---|---|---|---|

Index=0
M=1

SIB1

SIB1

Index=1
M=1/2

SIB1

SIB1

Index=8
M=2

SIB1

SIB1

A PDCCH monitoring
occasion corresponding to
SSB0

A PDCCH monitoring
occasion corresponding to
SSB1

FIG. 4

Random access apparatus

510

Processor

520

Memory

Bus interface

500

Transceiver

FIG. 5

Random access apparatus

~610

Processor

~620

Memory

Bus interface

~600

Transceiver

FIG. 6

Random access apparatus 70

Receiving unit — 710

Random access unit — 720

FIG. 7

Random access apparatus 80

Transmitting unit — 810

FIG. 8

## INTERNATIONAL SEARCH REPORT

| | International application No. |
|---|---|
| | **PCT/CN2024/079560** |

| A. | CLASSIFICATION OF SUBJECT MATTER |
|---|---|

H04W74/08(2024.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 波束, 非地面, 非陆地, 随机接入, 跳, 系统消息块, 系统信息块, 新, 新增, 时延, 延迟, 延时, 指示, beam, NTN, RACH, RA, hop, SIB, SIB0, SIB22, SIB23, additional, introduce, new, latency, indicate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114731711 A (BEIJING XIAOMI MOBILE SOFTWARE CO., LTD.) 08 July 2022 (2022-07-08) description, paragraphs [0057]-[0187] | 1-2, 7-9, 14-16, 21-23, 28-30, 35-37, 42-44 |
| A | CN 115004579 A (QUALCOMM INC.) 02 September 2022 (2022-09-02) entire document | 1-44 |
| A | US 2022070811 A1 (SAMSUNG ELECTRONICS CO., LTD.) 03 March 2022 (2022-03-03) entire document | 1-44 |
| A | WO 2021032453 A1 (NOKIA TECHNOLOGIES OY) 25 February 2021 (2021-02-25) entire document | 1-44 |
| A | ZTE CORP. et al. "Remaining FFSs on CP in IoT NTN" *3GPP TSG-RAN WG2 Meeting #116bis electronic, R2-2200699,* 11 January 2022 (2022-01-11), entire document | 1-44 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 April 2024** | **11 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/079560**

| Patent document cited in search report | | | Publication date (day/month/year) | Patent family member(s) | | | Publication date (day/month/year) |
|---|---|---|---|---|---|---|---|
| CN | 114731711 | A | 08 July 2022 | WO | 2023159504 | A1 | 31 August 2023 |
| CN | 115004579 | A | 02 September 2022 | EP | 4097874 | A2 | 07 December 2022 |
| | | | | US | 2021242935 | A1 | 05 August 2021 |
| | | | | US | 11764867 | B2 | 19 September 2023 |
| | | | | WO | 2021216150 | A2 | 28 October 2021 |
| | | | | WO | 2021216150 | A3 | 06 January 2022 |
| | | | | CN | 115004579 | B | 09 January 2024 |
| | | | | IN | 202227036980 | A | 21 October 2022 |
| US | 2022070811 | A1 | 03 March 2022 | EP | 4205463 | A1 | 05 July 2023 |
| | | | | EP | 4205463 | A4 | 06 March 2024 |
| | | | | WO | 2022045867 | A1 | 03 March 2022 |
| | | | | US | 2023117959 | A1 | 20 April 2023 |
| | | | | JP | 2023540946 | A | 27 September 2023 |
| | | | | CN | 116018848 | A | 05 April 2023 |
| | | | | IN | 202317022940 | A | 24 November 2023 |
| WO | 2021032453 | A1 | 25 February 2021 | EP | 4014360 | A1 | 22 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104105374